# EUROPÄISCHE PATENTSCHRIFT

(11) **EP 0 352 370 B1**
(45) Veröffentlichungstag und Bekanntmachung des Hinweises auf die Patenterteilung: **24.03.1993**
(21) Anmeldenummer: 88121466.2
(22) Anmeldetag: 22.12.1988
(51) Int. Cl.: B05C 17/00, B67B 7/86

(54) **Verfahren und Einrichtung zum öffnen einer Verschlussmembran im Austritts stutzen einer Kartusche**
Process and apparatus for opening a sealing membrane in the outlet part of a cartridge
Procédé et appareil pour ouvrir la membrane d' étanchéité dans la région débouchante d' une cartouche

(30) Priorität: 13.07.1988 DE 3823708
(43) Veröffentlichungstag der Anmeldung: 31.01.1990
(73) Patentinhaber: ATLAS COPCO ELEKTROWERKZEUGE GmbH, D-71361 Winnenden (DE)
(72) Erfinder: Stämmele, Siegfried, Dipl.-Ing. FH, D-7057 Winnenden (DE); Taschke, Franz, Dipl.-Ing., D-7000 Stuttgart 50 (DE); Saur, Wolfgang, Dr. Dipl.-Ing. Chem. ETH, CH-8863 Buttikon (CH); Radlinsky, Jan, Dipl.-Ing. Masch. ETH, CH-8803 Rüschlikon (CH)
(74) Vertreter: Gaiser, Hartmut, Dipl.-Ing.

(56) Entgegenhaltungen:
- EP-A- 0 209 667
- EP-A- 0 213 073
- DE-A- 2 537 022
- DE-A- 2 745 056
- DE-U- 8 805 328
- DE-U-87 097 532
- FR-A- 2 417 443
- FR-A- 2 424 856

## Beschreibung

Die Erfindung betrifft ein Verfahren und eine Einrichtung zum öffnen einer Verschlußmembran einer Kartusche oder dergleichen, welche eine auszupressende Substanz enthält, die im Ausgangszustand der Kartusche durch die in deren Austrittsstutzen angebrachte Verschlußmembran am Ausfliessen gehindert ist.

In dem DE-U-87 09 753.2 ist ein Elektrowerkzeug vorgeschlagen, mit dem sich Substanzen aus Kartuschen auspressen und vermischen lassen. Es ist dabei davon ausgegangen, daß die Kartuschen offen bzw. geöffnet sind, wenn sie in das Elektrowerkzeug eingesetzt werden. In dem DE-U-87 09 753.2 sind jedenfalls keine Maßnahmen zum öffnen der Kartuschen vorgesehen.

Mit Substanzen, insbesondere in pastösem Zustand gefüllte, in Aufnahmekammern eingesetzte und für gewerbliche Zwecke sowie von Heimwerkern benutzbare Kartuschen sind in den Fällen, in denen die betreffende Substanz luft- und feuchtigkeitsdicht abgeschlossen ist und das Auspressen der Substanz mit Hilfe elektrisch, pneumatisch oder hydraulisch betätigter Auspreßkolben (vgl. DE-U-87 09 753.2) erfolgt, meist mit einer im Austrittsstutzen angebrachten Membran verschlossen. Diese Membran ist vor Einleitung des Auspreßvorgangs so weit zu beseitigen, daß die pro Zeiteinheit aus der Kartusche auspreßbare Volumeneinheit den Anforderungen gerecht wird. Je nach Substanz und Verwendungszweck ist dem Kartuschenboden im Abstand eine abdichtende Membran vorgeordnet und der Raum zwischen dieser Membran und dem Kartuschenboden ist mit Silikagel oder dergleichen ausgefüllt.

Das Entfernen der Verschlußmembran erfolgte bisher manuell unter Zuhilfenahme eines geeigneten Werkzeugs, beispielsweise eines Dorns, mit dem die Verschlußmembran durchstoßen wurde und durch Ausweiten der Öffnung ein hinreichender Querschnitt für die auszupressende Substanz geschaffen wurde. Dies ist umständlich und der hierfür erforderliche Zeitaufwand ist verhältnismäßig groß.

Der Erfindung liegt die Aufgabe zugrunde, das ganze oder teilweise Entfernen der Verschlußmembran aus dem Strömungsweg der betreffenden Substanz zu automatisieren und dadurch einfach und zeitsparend zu gestalten.

Diese Aufgabe ist hinsichtlich des Verfahrens durch die Merkmale des kennzeichnenden Teils des Anspruchs 1 gelöst. Sie ist hinsichtlich der Einrichtung durch die Merkmale des kennzeichnenden Teils des Anspruchs 3 gelöst.

Weiterbildungen und zweckmäßige Ausgestaltungen der Erfindung sind in den Unteransprüchen angegeben.

Die Erfindung wird im nachstehenden anhand der Zeichnung, die ein bevorzugtes Ausführungsbeispiel schematisch veranschaulicht, erläutert.

Es zeigen:
- Fig. 1: eine Draufsicht auf eine Dosier- und Mischeinrichtung für zwei Komponenten mit durch einen Antriebsmotor betätigtem Auspreßkolben und durch denselben Antrieb in Drehung versetzten Mischer,
- Fig. 2: eine Seitenansicht des Kupplungsteils zwischen den Austrittsstutzen der Kartuschen und der Zuleitung zum Mischer im Schnitt,
- Fig. 3: eine Ansicht des Kupplungsteils gemäß Fig. 2 in Richtung A,
- Fig. 4: eine Seitenansicht des mit dem Austrittsstutzen einer Kartusche vereinigten Kupplungsteils im Schnitt, wobei dem in der Ausgangslage befindlichen Kartuschenboden eine Membran vorgeordnet ist,
- Fig. 5: eine Ansicht entsprechend Fig. 4, jedoch mit bereits vorwärtsbewegtem Auspreßkolben.

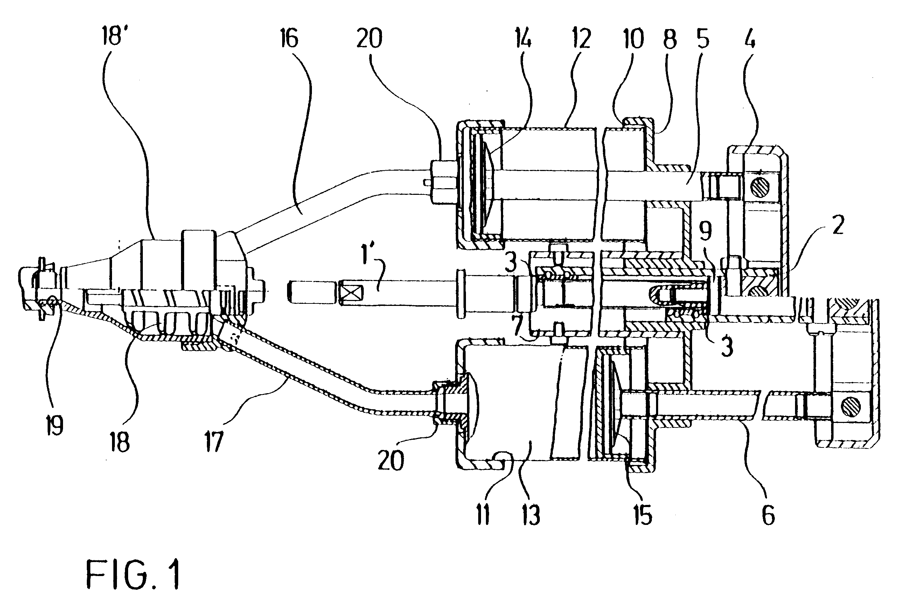

Die in Figur 1 mit 1 bezeichnete, drehbar in einem nicht dargestellten Getriebegehäuse gelagerte Gewindespindel wird unter Zwischenschaltung eines Getriebes durch einen Elektromotor angetrieben. Die Gewindespindel 1 ist in einem Schlittenteil 2 untergebracht, das im Bereich seines getriebeseitig liegenden Endes mit einer Spindelmutter 3 versehen ist, die fest im Innern des beispielsweise als Vierkant-Hohlprofil ausgebildeten Schlittenteils 2 angeordnet ist. Am anderen Ende des Schlittenteils 2 ist ein Träger 4 befestigt, in dem die rückwärtigen Enden zweier nebeneinander liegender Ausstoßkolbenstangen 5 und 6 gelenkig gelagert sind. Das durch die Gewindespindel 1 über die Spindelmutter 3 in eine Axialbewegung versetzbare Schlittenteil 2 befindet sich im Innern eines aus einem Vierkant-Hohlprofil gebildeten Längsholms 7, an dem eine Führung 8 für die beiden Ausstoßkolbenstangen 5 und 6 sowie für das Schlittenteil 2 angebracht ist. Der Längsholm 7 ist mittels Schrauben am nicht dargestellten Getriebegehäuse befestigt. An einem in der rückwärtigen Stirnseite der Gewindespindel 1 eingeschraubten Anschlag 9 kommt der Träger 4 in der vorderen Endlage des Schlittenteils 2 zur Anlage.

Die Führung 8 grenzt zwei Aufnahmekammern 10 und 11 für zwei Kartuschen 12, 13 ab, welche die miteinander zu mischenden Substanzen, zum Beispiel je eine Komponente eines Zweikomponentenklebers, enthalten. Dem Bodenteil jeder Kartusche ist ein auf der betreffenden Kolbenstange 5 und 6 angebrachter Ausstoßkolben 14,15 zugeordnet.

Beim Einschalten des Antriebs des Elektrowerkzeugs bzw. der Einrichtung laufen die Ausstoßkolben 14 und 15 auf den ihnen jeweils zugeordneten Kartuschenboden auf, der selbst ein Kolbenelement verkörpert. Den Kartuschen 12,13 in den Aufnahmekammern 10 und 11 ist ein axialer Bewegungsspielraum belassen, dessen Bedeutung später erläutert wird.

Der Inhalt der beiden Kartuschen 12 und 13 wird bei eine Vorschubbewegung ausführenden Ausstoßkolben 14 und 15 jeweils in eine Zuleitung 16,17 gepreßt, von denen jede in einen Mischer 18 mündet, der beim Ausführungsbeispiel als dynamischer Mischer ausgebildet ist. Der Mischer 18 wird dabei vom Wellenzapfen 1′ der Gewindespindel 1 angetrieben, die auch das Schlittenteil 2 über die Spindelmutter 3 betätigt. Die Austrittsdüse des Mischers für die beiden vermischten Komponenten ist mit 19 bezeichnet.

Zur Fixierung der Kartuschen 12 und 13 an den beiden in den Mischerkopf 18 einmündenden Zuleitungen 16 und 17 dient jeweils ein Kupplungsteil 20. Im Kupplungsfall bilden der Mischer 18 mit dem Mischerkopf 18′, die Zuleitungen 16, 17 mit den Kupplungsteilen 20 und die Kartuschen 12 und 13 eine Einheit, die komplett auswechselbar ist.

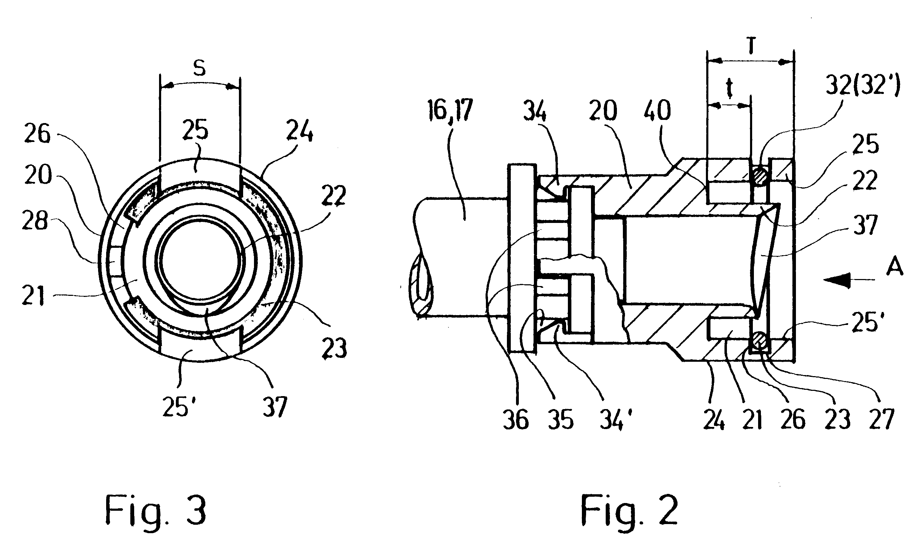

Wie die Figuren 2 und 3 zeigen, enthält das vorzugsweise aus einem Kunststoff bestehende Kupplungsteil 20 eine durch einen Ringspalt verwirklichte Eintauchkammer 21 mit der Tiefe t bzw. T, einen hohlen Schneidzapfen 22 und ein Halteglied 23 in Form eines offenen Federrings. Der Federring ist dabei durch zwei am Innenumfang der Außenwandung 24 in Umfangsrichtung gegeneinander versetzt angebrachte, sich nach innen erstreckende nockenförmige Ansätze 25, 25′ gegen Axialverschiebung gesichert, die mit einer im Innern der Wandung 24 befindlichen bundförmigen Anschlagfläche 26 Aufnahmenutabschnitte27 für den Federring abgrenzen.

Beim Ausführungsbeispiel liegen die sich in Umfangsrichtung über die Länge S erstreckenden Ansätze 25, 25′ einander diametral gegenüber. Eine Nase 28 verhindert eine Umlaufbewegung des Federrings und sichert diesen zugleich gegen Herausfallen. Damit der Federring beim Aufsetzen des Kupplungsteils 20 auf den Austritts- bzw. Anschlußstutzen 30 bzw. 31 der Kartuschen radial nach außen ausweichen kann, sind in seiner Wandung hinter den nockenförmigen Ansätzen 25 und 25′ schlitzförmige Durchbrüche 32, 32′, angebracht, deren Ausdehnung in Umfangsrichtung etwa derjenigen der nockenförmige Ansätze 25,25′ entspricht. In diese Schlitze hinein kann die Feder bei entsprechender radialer Beanspruchung ausweichen. Der Austrittsstutzen 30 bzw. 31 der Kartuschen 12 und 13 ist dabei zweckmäßigerweise mit einer Umfangsnut 33 versehen, in welche das Halteglied 23 (Federring) im Kupplungsfall eingreift (siehe hierzu Figur 5).

An seinem der Zuleitung 16 bzw. 17 zum Mischer 18 zugewandten Stirnseite ist das Kupplungsteil 20 mit federnden Zungen 34 versehen, die jeweils eine radial nach innen ragende Rasterhebung 34′ besitzten. Diese Rasterhebungen greifen im Kupplungsfall mit den zum Mischerkopf 18 führenden Zuleitungen 16 bzw. 17 einrastend in eine Umfangsnut 35 dieser Zuleitungen ein. Durch zwei Anschläge 36 in der Umfangsnut 35 ist das Kupplungsteil 20 gegen Verdrehen gesichert.

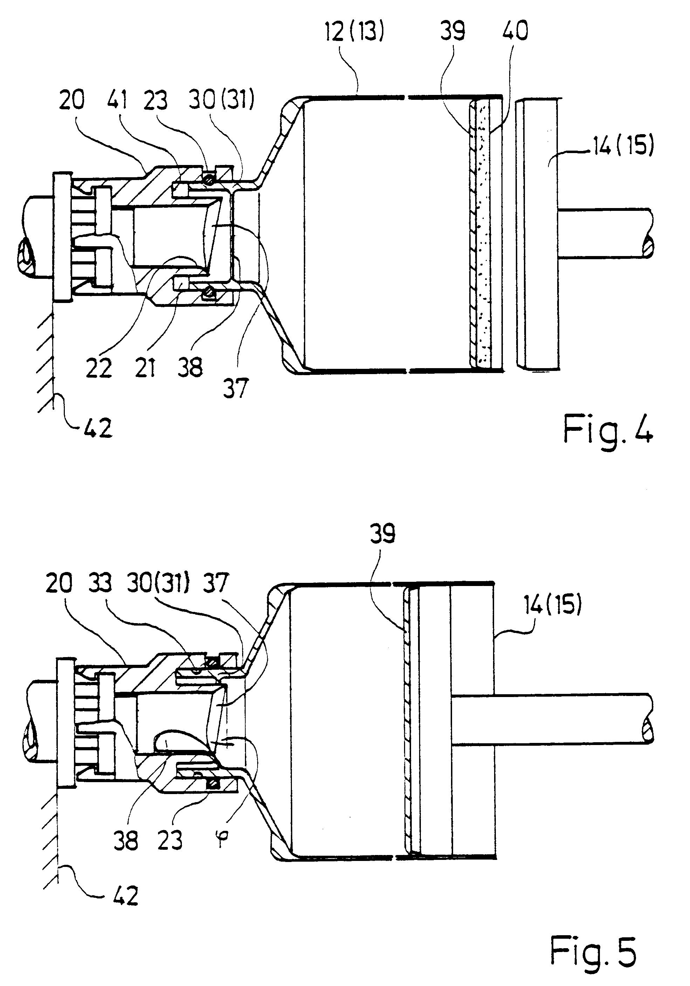

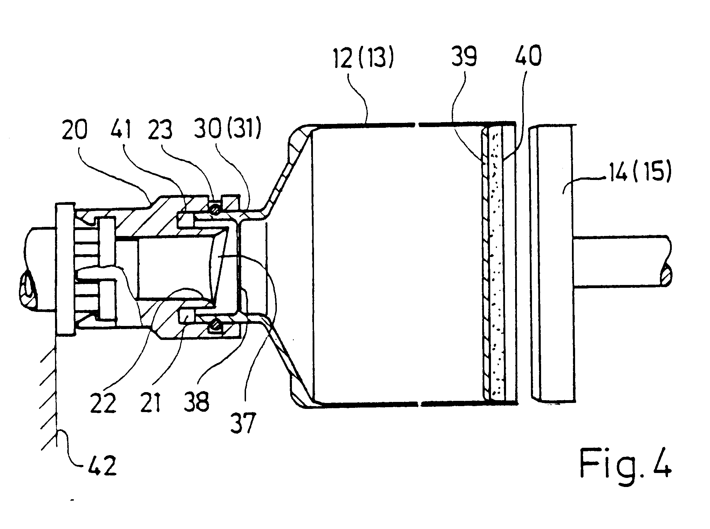

Die Frontkante des hohlen Schneidzapfens 22 ist abgeschrägt und mit einer Schneide 37 versehen. Diese Schneide ist, wie aus den Figuren 4 und 5 ersichtlich ist, der Verschlußmembran 38 der Kartusche 12 bzw. 13 zugeordnet.

Die Verfahrensweise zur ganzen oder teilweisen Beseitigung der Verschlußmembran 38 zwecks Freigabe des Ausströmkanals aus den Kartuschen 12 und 13 zu den zum Mischer 18 führenden Zuleitungen 16 und 17 ist wie folgt:
Beim Einschalten des Antriebs wird die Gewindespindel 1 in Drehung versetzt, desgleichen der Mischer 18 über den Wellenzapfen 1′ der Gewindespindel. Beim Auflaufen der beiden Ausstoßkolben 14 und 15 auf den axial verschiebbaren Boden 39 der Kartuschen 12 und 13 bzw. auf eine dem Boden 39 vorgelagerte Membran 40, wobei die letztere zerplatzt, führt jede der beiden Kartuschen 12 und 13 relativ zum jeweils unverschiebbaren Kupplungsteil 20 eine Vorwärtsbewegung aus. Dabei dringt der Austrittsstutzen 30 bzw. 31 der jeweiligen Kartusche ausgehend von der Ruhelage gemäß Fig. 4 in die Eintauchkammer 21 des Kupplungsteils 20 ein, wie dies aus Fig. 5 ersichtlich ist. Der Boden 41 der Eintauchkammer 21 des Kupplungsstücks 20 bildet dabei eine Anschlagbegrenzung.
Während dieser Relativbewegung Kartuschen 12,13 - Kupplungsstück 20 läuft die Verschlußmembran 38 der Kartuschen jeweils auf die Schneide 37 des hohlen Schneidzapfens 22 auf und wird dadurch eingeritzt bzw. durchtrennt. Unter dem Druck der auszupressenden Substanz legt sich dann die Verschlußmembran 38 nach scharnierartigem Umbiegen an die Innenwandung des Kupplungsteils 20 an, so daß die in der Kartusche befindliche Substanz praktisch unbehindert herausgepreßt werden kann.
Die Umfangslänge und Ausgestaltung der Schneide 37 des Schneidzapfens 22 ist den jeweiligen Gegebenheiten entsprechend zu wählen. Eine 60° bis 180° entsprechende Umfangslänge (Bogenlänge) der Schneidkante hat sich als zweckmäßig erwiesen.

Die Kupplung 20 stützt sich dabei, gegebenenfalls zusätzlich, an einem in den Figuren 4 und 5 angedeuteten und mit 42 bezeichneten Gestellteil ab. Die Vereinigung des Kupplungsteils 20 einerseits mit der zugehörigen Zuleitung 16 bzw. 17 zum Mischer 18 und andererseits mit dem Austrittsstutzen 30 bzw. 31 kann auch auf eine andere als die veranschaulichte Weise erfolgen, beispielsweise nach Art eines Bajonettverschlusses.

## Patentansprüche

1. Verfahren zum öffnen einer Verschlußmembran einer Kartusche oder dergleichen, welche eine auszupressende Substanz enthält, die im Ausgangszustand der Kartusche durch die in deren Austrittsstutzen angebrachte Verschlußmembran am Ausfließen gehindert ist, dadurch gekennzeichnet, daß die im Austrittsstutzen(30,31) der Kartusche(12,13) befindliche Verschlußmembran(38) durch eine Relativbewegung zwischen der Kartusche(12,13) und einem an deren Austrittsstutzen(30,31) angeschlossenen Kupplungsteil(20) mittels eines am letzteren angebrachten Schneideelements(22) wenigstens in einem solchen Ausmaß aufgetrennt wird, daß die Verschlußmembran(38) infolge des zu Beginn des Auspreßvorgangs durch die in der Kartusche(12,13) befindliche Substanz auf sie ausgeübten Drucks die Strömungsbahn für diese Substanz ganz oder teilweise freigibt.

2. Verfahren nach Anspruch 1, dadurch gekennzeichnet, daß das Kupplungsteil(20) fest angeordnet ist und die Kartusche(12,13) relativ zum Kupplungsteil(20) verschoben wird.

3. Einrichtung zum öffnen einer Verschlußmembran im Austrittsstutzen einer Kartusche, dadurch gekennzeichnet, daß ein an den Austrittsstutzen(30,31) der Kartusche(12,13) angeschlossenes Kupplungsteil(20) eine Eintauchkammer(21), ein Schneidelement(22) und ein Halteglied(23) für den Austrittsstutzen(30,31) aufweist, wobei die Tiefe der Eintauchkammer(21) so bemessen ist, daß die Kartusche(12,13) unter der Einwirkung einer Schubkraft relativ zum Kupplungsteil(20) um ein solches Maß verschiebbar ist, daß die Verschlußmembran(38) der Kartusche(12,13) während deren Vorschubbewegung auf das Schneidelement(22) aufläuft und dabei so weit aufgetrennt wird, daß die Verschlußmembran(38) dem Druck der auszupressenden Substanz nicht mehr standhält und in eine eine Strömungsquerschnitt für die Substanz freigebende Position gelangt.

4. Einrichtung nach Anspruch 3, dadurch gekennzeichnet, daß das Schneidelement (22) als hohler Schneidzapfen ausgebildet ist, der so bemessen und ausgestaltet is, daß die Verschlußmembran (38) in einem begrenzten Bereich mechanisch mit der Wandung des Austrittsstutzens (30,31) der Kartusche verbunden bleibt, wobei diese Verbindungsstelle eine scharnierartige Schwenkachse für die Verschlußmembran (38) bildet, die sich unter der Wirkung der ausfliessenden Substanz an die Innenwandung des hohlen Schneidzapfens anlegt.

5. Einrichtung nach Anspruch 4, dadurch gekennzeichnet, daß die Schneidkante (37) des hohlen Schneidzapfens bezogen auf eine quer zur Längsachse der Kartusche verlaufende Ebene schräg verläuft, wobei der Schrägungswinkel φ positiv oder negativ sein kann.

6. Einrichtung nach den Ansprüchen 3 bis 5, dadurch gekennzeichnet, daß das Kupplungsteil (20) an seiner der Kartusche zugewandten Stirnseite wenigstens zwei in Umfangsrichtung gegeneinander versetzt liegende nockenförmige Ansätze (25,25′) enthält, die sich radial nach innen, um einen begrenzten Winkel in Umfangsrichtung und soweit axial nach hinten erstrecken, daß sie zusammen mit einer bundförmigen Anschlagfläche (26) im Innern der Wandung (24) des Kupplungsteils Aufnahmenutabschnitte (27) für ein als Federring ausgebildetes Halteglied (23) abgrenzen, dem in der Wandung im Bereich hinter den nockenförmigen Ansätzen (25,25′) angebrachte Durchbrüche (32,32′) für sein radiales Ausweichen zugeordnet sind.

7. Einrichtung nach Anspruch 6. dadurch gekennzeichnet, daß das Kupplungsteil (20) federnde Zungen (34) aufweist, die mit Rasterhebungen (34′) versehen sind, welche im Vereinigungsfall mit der Zuleitung (16 bzw. 17) zur Austrittsdüse (19) in eine Umfangsgnut (35) der betreffenden Zuleitung einrastend eingreifen.

8. Einrichtung nach Anspruch 7, dadurch gekennzeichnet, daß das Kupplungsteil (20) und die Zuleitung (16,17) durch in der Umfangsnut (35) der Zuleitung angebrachte Anschläge (36) gegen Verdrehen gesichert sind.

9. Einrichtung nach einem der vorhergehenden Ansprüche, dadurch gekennzeichnet, daß die Austrittsdüse (19) einem dynamischen Mischer (18) nachgeordnet ist, in den zwei Zuleitungen (16,17) für zwei miteinander zu vermischende Substanzen münden.

10. Einrichtung nach Anspruch 9, dadurch gekennzeichnet, daß der Mischer (18) und die Ausstoßkolben (14,15) von einem einzigen Antriebsmotor und einem diesem nachgeschalteten Getriebe angetrieben sind.

11. Einrichtung nach einem der vorhergehenden Ansprüche, dadurch gekennzeichnet, daß dem Boden (39) der Kartuschen (12,13) eine beim Auflaufen der Ausstoßkolben (14,15) platzende Membran (40) vorgeordnet ist, und daß in den Raum zwischen Kartuschenboden und Membran ein feuchtigkeitsaufnehmender Stoff eingebracht ist.

## Claims

1. Method for the opening of a closure membrane of a cartridge or the like, which contains a substance which is to be expressed and which is prevented from flowing out in the initial state of the cartridge by the closure membrane mounted in its exit nipple, characterised thereby, that the closure membrane (38) disposed in the exit nipple (30, 31) of the cartridge (12, 13) is cut open through a relative movement between the cartridge (12, 13) and a coupling part (20) connected to the exit nipple (30, 31) thereof by means of a cutting element (22) mounted at the coupling part (20) at least to such an extent that the closure membrane (38) frees the flow path for this substance entirely or partially in consequence of the pressure exerted on it by the substance disposed in the cartridge (12, 13) at the beginning of the extrusion process.

2. Method according to claim 1, characterised thereby, that the coupling part (20) is arranged to be fixed and the cartridge (12, 13) is displaced relative to the coupling part (20).

3. Equipment for the opening of a closure membrane in the exit nipple of a cartridge, characterised thereby, that a coupling part (20) connected to the exit nipple (30, 31) of the cartridge (12, 13) comprises an immersion chamber (21), a cutting element (22) and a retaining member (23) for the exit nipple (30, 31), wherein the depth of the immersion chamber (21) is so dimensioned that the cartridge (12, 13) is displaceable relatively to the coupling part (20) under the effect of a thrust force by such an amount that the closure membrane (38) of the cartridge (12, 13) during the advancing movement thereof runs up onto the cutting element (22) and is in that case cut open so far that the closure membrane (38) no longer withstands the pressure of the substance to be expressed and gets into a position freeing a flow cross-section for the substance.

4. Equipment according to claim 3, characterised thereby, that the cutting element (22) is constructed as hollow cutting spigot which is so dimensioned and structured that the closure membrane (38) remains mechanically connected in a limited region with the wall of the exit nipple (30, 31) of the cartridge, wherein this connecting place forms a hinge-like pivot axis for the closure membrane (38), which under the effect of the outflowing substance lays itself against the inward wall of the hollow cutting spigot.

5. Equipment according to claim 4, characterised thereby, that the cutting edge (37) of the hollow cutting spigot extends obliquely with respect to a plane extending obliquely to the longitudinal axis of the cartridge (12, 13), wherein the angle φ of inclination can be positive or negative.

6. Equipment according to the claims 3 to 5, characterised thereby, that the coupling part (20) at its end facing the cartridge contains at least two dog-shaped projections (25, 25'), which lie displaced one relative to the other in circumferential direction and which extend radially inwards, through a limited angle in circumferential direction and so far axially rearwards that they - together with a collar-shaped abutment surface (26) in the interior of the wall (24) of the coupling part - delimit receiving groove portions (27) for a retaining member (23), which is constructed as a spring ring and with which are associated, for its radial deviation, passages (32, 32') made in the wall in the region behind the dog-shaped projections (25, 25').

7. Equipment according to claim 6, characterised thereby, that the coupling part (20) comprises resilient tongues (34), which are provided with detent protrusions (34'), which in the case of the union of the exit nozzle (19) with the feed duct (16 or 17) engage detentingly into a circumferential groove (35) of the feed duct concerned.

8. Equipment according to claim 7, characterised thereby, that the coupling part (20) and the feed duct (16, 17) are secured against rotation by abutments (36) mounted in the circumferential groove (35) of the feed duct.

9. Equipment according to one of the preceding claims, characterised thereby, that the exit nozzle (19) is arranged downstream of a dynamic mixer (18), into which open two feed ducts (16, 17) for two substances to be intermixed each with the other.

10. Equipment according to claim 9, characterised thereby, that the mixer (18) and the ejector pistons (14, 15) are driven by a single drive motor and a gear connected behind this.

11. Equipment according to one of the preceding claims, characterised thereby, that a membrane (40), which bursts on the running-out of the ejector pistons (14, 15), is arranged in front of the base (39) of the cartridges (12, 13) and that a moisture-absorbing substance is introduced into the space between the cartridge base and the membrane.

## Revendications

1. Procédé pour l'ouverture d'une membrane d'étanchéité d'une cartouche ou similaire qui contient une substance à extraire, dont l'écoulement est évité, dans la position de sortie de la cartouche, par une membrane d'étanchéité disposée dans ses tubulures de sortie, caractérisé en ce que la membrane d'étanchéité (38), se trouvant dans la tubulure de sortie (30, 31) de la cartouche (12, 13), est détachée par un mouvement relatif entre la cartouche (12, 13) et une pièce d'accouplement (20) raccordée à la tubulure de sortie (30, 31) à l'aide d'un élément de coupe (22) disposé sur ce dernier, de sorte que la membrane d'étanchéité (38), à la suite de la pression exercée sur elle au début du processus d'extraction par la substance se trouvant dans la cartouche (12, 13), libère complètement ou partiellement la voie d'écoulement pour cette substance.

2. Procédé selon la revendication 1, caractérisé en ce que la pièce d'accouplement (20) est disposée fixement et la cartouche (12, 13) est relativement déportée par rapport à la pièce d'accouplement (20).

3. Dispositif pour l'ouverture d'une membrane d'étanchéité dans la tubulure de sortie d'une cartouche, caractérisé en ce qu'une pièce d'accouplement (20), raccordée aux tubulures de sortie (30, 31) de la cartouche (12, 13), présente une chambre d'immersion (21), un élément de coupe 22 et un organe support (23) pour la tubulure de sortie (30, 31), la profondeur de la chambre d'immersion (21) étant dimensionnée de sorte que la cartouche (12, 13) puisse, sous l'effet d'une force de poussée, être relativement déplacée vers la pièce d'accouplement (20), suffisamment pour que la membrane d'étanchéité (38) de la cartouche (12, 13) passe sur l'élément de coupe (22) pendant son mouvement d'avance et soit alors suffisamment ouverte pour que la membrane d'étanchéité (38) ne résiste plus à la pression de la substance à extraire et arrive dans une position libérant une section d'écoulement pour la substance.

4. Dispositif selon la revendication 3, caractérisé en ce que l'élément de coupe (22) est conçu comme un tourillon de coupe creux, qui est dimensionné et conçu de sorte que la membrane d'étanchéité (38) reste reliée mécaniquement dans une zone limitée, avec la paroi de la tubulure de sortie (30, 31) de la cartouche, ce point de fonction formant alors un axe de pivotement du type charnière pour la membrane d'étanchéité (38) qui se colle, sous l'action de la substance qui s'écoule, contre la paroi interne du tourillon de coupe creux.

5. Dispositif selon la revendication 4, caractérisé en ce que l'arête coupante (37) du tourillon de coupe creux est inclinée par rapport à un plan s'étendant transversalement à l'axe longitudinal de la cartouche, l'angle φ d'inclinaison pouvant être alors négatif ou positif.

6. Dispositif selon les revendications 3 à 5, caractérisé en ce que la pièce d'accouplement (20) comprend sur sa face frontale tournée vers la cartouche, au moins deux saillies en forme de came (25, 25') se trouvant déportées l'une par rapport à l'autre dans le sens périphérique, qui s'étendent radialement vers l'intérieur sur un angle limité vers la périphérie, et axialement vers l'arrière, de sorte qu'elles délimitent ensemble, avec une surface de butée (26) en forme de collet à l'intérieur de la paroi (24) de la pièce d'accouplement, des sections de rainures de réception pour un organe support (23) conçu comme un anneau ressort, auquel sont attribués, pour son écartement radial, des passages (32 ,32') disposés dans la paroi dans la zone derrière les saillies (25, 25') en forme de came.

7. Dispositif selon la revendication 6, caractérisé en ce que la pièce d'accouplement (20) présente des languettes élastiques (34) qui sont munies de crans d'encliquetage (34') qui pénètrent en s'encliquetant dans une rainure périphérique (35) de la conduite d'amenée considérée, dans le cas d'une liaison avec la conduite (16 ou 17) d'amenée à la buse de sortie (19).

8. Dispositif selon la revendication 7, caractérisé en ce que la pièce d'accouplement (20) et la conduite d'amenée (16, 17) sont protégées contre la torsion à l'aide des butées (36) disposées dans la rainure périphérique (35) de la conduite d'amenée.

9. Dispositif selon l'une des revendications précédentes, caractérisé en ce que la buse de sortie (19) est disposée après un mélangeur dynamique (18), dans lequel débouchent deux conduites d'amenée (16, 17) pour le mélange des substances à mélanger entre elles.

10. Dispositif selon la revendication 9, caractérisé en ce que le mélangeur 18 et les pistons d'extraction (14, 15) sont entraînés par un seul moteur d'entraînement et par un engrenage enclenché à la suite de celui-ci.

11. Dispositif selon l'une des revendications précédentes, caractérisé en ce qu'est disposée, devant le fond (39) des cartouches (12, 13), une membrane (40) qui éclate à la montée du piston de poussée (14, 15) et que dans l'espace entre le fond de la cartouche et la membrane est introduite une matière absorbant l'humidité.
